Europäisches Patentamt

European Patent Office

Office européen des brevets

(19)

(11) Veröffentlichungsnummer: **0 095 518**
B1

(12) # EUROPÄISCHE PATENTSCHRIFT

(45) Veröffentlichungstag der Patentschrift:
14.08.85

(21) Anmeldenummer: 82104745.3

(22) Anmeldetag: 29.05.82

(51) Int. Cl.⁴: **G 03 F 3/08**

(54) **Verfahren zur tonwertabhängigen Farbrücknahme im Vierfarbendruck.**

(43) Veröffentlichungstag der Anmeldung:
07.12.83 Patentblatt 83/49

(45) Bekanntmachung des Hinweises auf die Patenterteilung:
14.08.85 Patentblatt 85/33

(84) Benannte Vertragsstaaten:
AT BE CH DE FR GB IT LI NL SE

(56) Entgegenhaltungen:
US - A - 2 807 660

FOGRA-FORSCHUNGSBERICHT 1203, 1981 Seiten
1-26, München, DE., G. OTSCHIK: "Untersuchungen zur
Veränderung des Farbsatzaufbaues durch geänderte
Farbauszüge für die Teilfarbe Schwarz""

(73) Patentinhaber: **DR.-ING. RUDOLF HELL GmbH,
Grenzstrasse 1-5, D-2300 Kiel 14 (DE)**

(72) Erfinder: **Wellendorf, Klaus, Kreienholt 6,
D-2305 Kitzeberg bei Kiel (DE)**

## Beschreibung

Die vorliegende Erfindung betrifft ein Verfahren zur modifizierten tonwertabhängigen Farbrücknahme im Vierfarbendruck, wobei die Farbanteile der bunten Druckfarben Gelb (Y), Magenta (M) und Cyan (C) reduziert werden und zur Kompensation dieser Rücknahme die Farbmenge der Druckfarbe Schwarz (K) erhöht wird.

Die vorliegende Erfindung bezieht sich auf das Gebiet der Drucktechnik, insbesondere des Vierfarbendrucks.

Es ist bereits aus dem Fogra-Forschungsbericht 1.203, Untersuchungen zur Veränderung des Farbsatzaufbaus durch geänderte Farbauszüge für die Teilfarbe Schwarz, Günter Otschik, S. 4, rechte Spalte, unter dem Kapitel 3.1 bekannt, bei der Farbrücknahme im Vierfarbendruck möglichst mit vollständigem Unbuntaufbau zu arbeiten, wenn ein Intensiv-Schwarz, d.h. eine intensive, aber teure Druckfarbe „Schwarz", zur Verfügung steht. Unter vollständigem Unbuntaufbau wird in der Reproduktionstechnik verstanden, dass bei der Reproduktion von Grauwerten und in den extrem tiefen Tönen nur mit „Schwarz" gedruckt wird, d.h., dass in den Farbauszügen Gelb, Magenta und Cyan an diesen Bildstellen kein bunter Farbanteil enthalten ist und gedruckt wird.

Bei billigeren, in der Praxis meist verwendeten Druckfarben für die Farbe Schwarz tritt aber eine Vergrauung ein, wenn mit 100% Schwarz gedruckt wird. Aus diesem Grunde werden die Farbauszüge der bunten Druckfarben nicht auf 0 reduziert, sondern es wird über den gesamten Tonwertbereich bei grauen Tönen bis zum äussersten Schwarz hin ein Rest an Buntfarbe gedruckt, der zu einer höheren Dichte führt, wobei dieser Restwert zu lichten Tönen hin verlaufend abnimmt.

Hierbei besteht die Gefahr, dass bei der Reproduktion von Grautönen im gesamten Tonbereich Farbstiche auftreten, wenn Schwankungen im Gleichgewicht der bunten Druckfarben Y, M, C auftreten, was während des Druckprozesses leicht geschehen kann, siehe eingangs genannter Fogra-Forschungsbericht, S. 3 und 4, Kapitel 1 und 2.

Ein weiterer Nachteil gegenüber der vollständigen Farbrücknahme besteht darin, dass in dem Fall, dass die Grautöne noch durch Buntanteile reproduziert werden, ein höherer Farbverbrauch an Buntfarben auftritt, als wenn mit einem Intensiv-Schwarz gearbeitet wird.

Um eine sichere Graubalance bei niedrigem Farbverbrauch zu erreichen, ist daher in der älteren EP-A-0091501 für den Vierfarbendruck eine tonwertabhängige Farbrücknahme vorgeschlagen worden, bei der die Farbanteile der bunten Druckfarben Gelb (Y), Magenta (M) und Cyan (C) reduziert werden und zur Kompensation dieser Rücknahme die Farbmenge der Druckfarbe Schwarz (K) erhöht wird, wobei bis zu einem Grauwert, der dem Vollton der verwendeten Druckfarbe Schwarz entspricht, mit nahezu vollständigem Unbuntaufbau gearbeitet wird und von diesem Grauwert aus zur äussersten Bildtiefe hin die Farbanteile der bunten Druckfarben ansteigen.

Mit diesem Verfahren lassen sich sehr gute Resultate erzielen, aber es hat sich gezeigt, dass es Fälle gibt, in denen es zu sogenannten Abrissen im Bild kommen kann. Ein Beispiel für einen solchen Abriss ist bei der Wiedergabe von Pastelltönen, z.B. im Magentabereich, gegeben, wenn bei einem solchen Farbbereich ein Übergang zu einem Grauwert auftritt. Bei vollständigem Unbuntaufbau wird zwar in dem magentafarbigen Bereich, wenn auch weniger, Magenta gedruckt, aber im Graubereich ist kein Magenta vorhanden, so dass es zur Ausbildung einer Konturlinie kommt, die im Originalbild nicht vorhanden ist. Solche Effekte können bei der Reproduktion störend ins Auge fallen.

Der vorliegenden Erfindung liegt daher die Aufgabe zugrunde, ein Verfahren anzugeben, bei dem auch bei hoher Farbrücknahme solche Effekte vermieden werden, um die Bildqualität zu verbessern.

Die Erfindung erreicht dies durch die im Anspruch 1 angegebenen Massnahmen. Die Erfindung wird im folgenden anhand der Fig. 1 bis 3 näher erläutert. Es zeigen:

Fig. 1a den Verlauf der Farbauszugssignale bei der farbtonabhängigen Farbrücknahme ohne bzw. mit Graubalance (Stand der Technik),

Fig. 2a den Verlauf der Farbauszugssignale bei der modifizierten grautonabhängigen Farbrücknahme ohne Graubalance,

Fig. 2b einen vergrösserten Ausschnitt aus Fig. 2a,

Fig. 3a den Verlauf der Farbauszugssignale bei der modifizierten grautonabhängigen Farbrücknahme mit Graubalance, und

Fig. 3b einen vergrösserten Ausschnitt aus Fig. 3a.

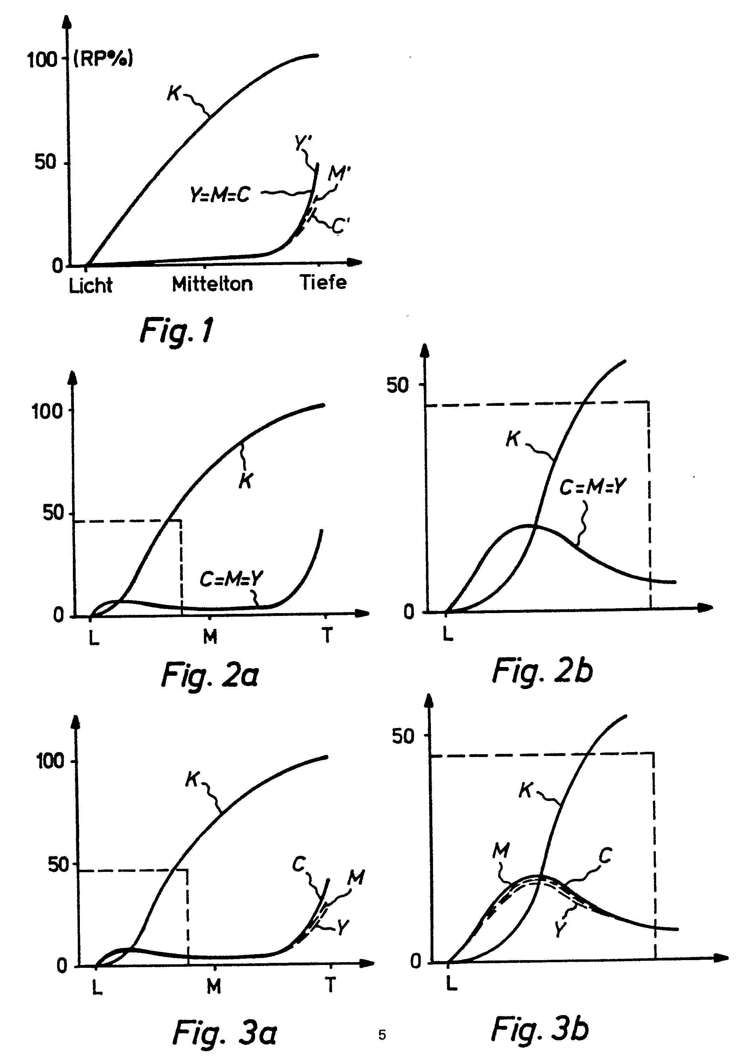

In Fig. 1 sind die Farbauszugssignale über dem Tonwertbereich von lichten Tönen bis zur vollen Tiefe von 0-100 Rasterpunktgrössen dargestellt.

Die Kurve $Y=M=C$ stellt den Verlauf der Farbauszugssignale der bunten Farben Cyan, Magenta und Gelb dar, wie er sich mit Farbrücknahme in Verbindung mit dem Farbauszugssignal für die Farbe Schwarz, die mit K bezeichnet ist, ergibt.

Wie aus der Figur ersichtlich, wird der vollständige Unbuntaufbau für die Reproduktion der Grauwerte zu tiefen Tönen hin möglichst lange beibehalten, und zwar bis zu einem Grauwert, der dem Vollton der verwendeten Druckfarbe Schwarz entspricht. Von diesem Grauwert ausgehend, nehmen die Farbanteile der bunten Druckfarben Y, M, C wieder zu, und zwar im Vollton bis zu einem Wert, der entweder dem Wert entspricht, den die Buntfarben ohne Farbrücknahme zur Reproduktion dieser Dichte annehmen würden, oder bis zu einem vorgegebenen Wert, der sich aus dem jeweiligen Druckverfahren und den verwendeten Druckfarben ergibt. Bei dem in Fig. 1 dargestellten Fall der Kurve $Y=M=C$ wird ohne Graubalance gearbeitet, d.h. dieser Fall ist anwendbar für Druckverfahren, bei denen sich beim Übereinanderdruck mit gleichen Anteilen kein Farbstich ergibt. Bei dem weiterhin dargestellten Fall der Kurven Y', M' und C' ist eine Graubalance durchgeführt.

Fig. 2a zeigt den Verlauf der bunten Druckfarben für den Fall, dass mit einer modifizierten Farbrücknahme ohne Graubalance gearbeitet wird. Die durchgezogene Kurve Y=M=C ist in einem Teilbereich, hier im Lichterbereich, leicht angehoben, wogegen bei der Druckfarbe Schwarz an dieser Stelle eine Absenkung vorliegt, da die bunten Druckfarben Y, M, C hier bereits einen Schwarzanteil liefern.

Die Lage des Teilbereichs, in dem die Buntfarben angehoben werden bzw. die Schwarzfarbe abgesenkt wird, hängt vom Bild bzw. vom jeweiligen Druckverfahren ab.

Um den Kurvenverlauf im Bereich der Anhebung deutlicher zu machen, ist in Fig. 2b ein vergrösserter Ausschnitt der Fig. 2 dargestellt. Man erkennt deutlicher, dass die Absenkung der Menge der Druckfarbe Schwarz sich aus der Kompensation der Anhebung der bunten Druckfarben Y, M, C ergibt.

Fig. 3a zeigt den gleichen Kurvenverlauf wie Fig. 2a, aber mit Graubalance, d.h. bei dunklen Neutraltönen wird mit unterschiedlichen Mengen der jeweiligen Buntfarben gedruckt, um Farbstiche, die durch das jeweilige Druckverfahren und/oder die verwendeten Druckfarben bedingt sind, auszugleichen.

Fig. 3b zeigt im Detail, wie sich die Graubalance in dem Teilbereich der Anhebung der Buntfarben bzw. der Absenkung der Druckfarbe Schwarz auswirkt. Entsprechend der Anhebung der Buntfarben im dunken Neutralton, wird auch hier in dem dargestellten Teilbereich die bunte Druckfarbe C gegenüber der Druckfarbe M und die Druckfarbe M gegenüber der Druckfarbe Y angehoben. Vorlagenspezifisch oder aber auch in Abhängigkeit vom jeweiligen Druckverfahren kann sich auch eine andere Reihenfolge für die Anhebung bzw. Absenkung der einzelnen Druckfarben ergeben.

## Patentanspruch

Verfahren zur tonwertabhängigen Farbrücknahme im Vierfarbendruck, wobei die Farbanteile der bunten Druckfarben Gelb (Y), Magenta (M) und Cyan (C) reduziert werden und zur Kompensation dieser Rücknahme die Farbmenge der Druckfarbe Schwarz (K) erhöht wird, wobei bis zu einem Grauwert, der dem Vollton der verwendeten Druckfarbe Schwarz entspricht, mit nahezu vollständigem Unbuntaufbau gearbeitet wird und von diesem Grauwert aus zur äussersten Bildtiefe hin die Farbanteile der bunten Druckfarben ansteigen, und wobei zur Vermeidung von Abrissen die Farbanteile der bunten Druckfarben in einem Teilbereich des Bereichs vor dem genannten Grauwert, vorzugsweise im Lichterbereich, angehoben werden und die Druckfarbe Schwarz in diesem Teilbereich entsprechend zurückgenommen wird.

## Claim

A method for tone-dependent colour reduction in four-colour printing, the colouration proportions of the chromatic printing colours yellow (Y), magenta (M) and cyan (C) being reduced and the dye quantity of the black printing dye (K) being increased to make up for this reduction, the operation being performed with an almost total achromatic structure up to a grey value which corresponds to the full tone of the black printing dye utilized, and the colouration proportions of the chromatic printing dyes rising again from this grey value to the extreme image depth and, for prevention of separations, the colouration proportions of the chromatic printing dyes being increased in a partial range of the range preceding the said grey value, preferably within the lighter range, and the black printing dye being reduced commensurately within this partial range.

## Revendication

Procédé pour la reprise des couleurs en fonction des valeurs de teinte dans l'impression quadrichrome, procédé dans lequel les composantes de couleur des couleurs d'impression jaune (Y), magenta (M) et cyan (C) sont réduites, tandis qu'en compensation de colore,cette reprise la quantité d'encre d'impression noire (K) est augmentée, cependant que, jusqu'à une valeur de gris, correspondant à une teinte homogène de la couleur noire d'impression utilisée, on opère avec une structure presque totale incolore et, en partant de cette valeur de gris vers des parties extrêmement foncées de l'image, les composantes de couleur des couleurs d'impression augmentent, cependant que, pour éviter des solutions de continuité, les composantes de couleur des couleurs d'impression sont accentuées dans une partie de la zone avant la valeur de gris précitée, de préférence dans la zone claire, et la couleur noire d'impression est reprise de façon correspondante dans cette partie de zone.

Fig. 1

Fig. 2a

Fig. 2b

Fig. 3a

Fig. 3b